# EUROPÄISCHE PATENTANMELDUNG

(11) **EP 4 371 685 A1**
(43) Veröffentlichungstag der Anmeldung: **22.05.2024**
(21) Anmeldenummer: 23208310.5
(22) Anmeldetag: 07.11.2023
(51) Int. Cl.: B23B 51/04

(54) **ANORDNUNG AUS WENIGSTENS EINER BOHRKRONE UND WENIGSTENS EINEM ANSCHLAG**

(30) Priorität: 17.11.2022 AT 508712022
(71) Anmelder: Tyrolit - Schleifmittelwerke Swarovski AG & Co K.G., 6130 Schwaz (AT)
(72) Erfinder: DAXER, Georg, 6212 Eben am Achensee (AT); NÖSSLER, Thomas, 6220 Buch in Tirol (AT)
(74) Vertreter: Torggler & Hofmann Patentanwälte - Innsbruck

(57) **Zusammenfassung**

Anordnung (1) aus wenigstens einer Bohrkrone (2) und wenigstens einem Anschlag (3) für einen im Zuge einer Bohrung entstehenden Bohrkern (22) oder Teile eines Bohrkerns 22, wobei der wenigstens eine Anschlag (3) wenigstens eine Fluidöffnung (4) quer zu einer Drehachse (5) der wenigstens einen Bohrkrone (2) aufweist, wobei der wenigstens eine Anschlag (3) eine zentrale Durchgangsöffnung (6) zur Aufnahme eines Zentrierdorns (7) aufweist.

## Beschreibung

Die vorliegende Erfindung betrifft eine Anordnung gemäß dem Oberbegriff des Anspruchs 1 und eine Bohrmaschine mit wenigstens einem fluidführenden Abschnitt, wenigstens einer solchen Anordnung und einer Befestigungsvorrichtung zur Befestigung der Bohrkrone oder der Anordnung an der Bohrmaschine. Weiterhin betrifft die Erfindung ein Verfahren zur Bearbeitung eines Werkstücks mittels wenigstens einer solchen Anordnung.

Zum Stand der Technik zählt EP 3 144 099 B1. Darin wird ein Einsatz für eine Bohrmaschine offenbart. Dieser Einsatz kann auch als Bohrkernstopper oder Bohrkernabstandshalter bezeichnet werden und dient dazu, Absaugöffnungen freizuhalten, selbst wenn ein Bohrkern abbricht und von einem Luftkühlungssystem angesaugt wird. Im Anwendungsfall wird dabei eine Bohrkrone auf das Außengewinde einer Antriebswelle einer Bohrmaschine befestigt. Der Einsatz wird hingegen in die Antriebswelle eingeschraubt. Hierzu ist es erforderlich, dass die Antriebswelle ein Innengewinde aufweist.

Jedoch ergeben sich bei diesem Stand der Technik unterschiedliche Nachteile.

Ein Nachteil ist, dass der Einsatz, Bohrkernstopper oder Bohrkernabstandhalter nicht bei jeder Bohrmaschine eines jeden Herstellers verwendet werden kann, da manche Bohrmaschinen kein Innengewinde aufweisen und somit neben der Bohrkrone kein weiteres Mittel an der Antriebswelle befestigt werden kann. Das heißt, die Einsatzmöglichkeiten eines Einsatzes nach dem Stand der Technik sind begrenzt.

Ein weiterer Nachteil ist, dass für das "Anbohren" oftmals ein Zentrierdorn verwendet wird, um die Bohrkrone exakt an der gewünschten Stelle zu platzieren. Ein solcher Zentrierdorn wird zu diesem Zweck in die Antriebswelle montiert. Damit ist es bei der Verwendung eines Zentrierdorns nicht mehr möglich, zusätzlich einen Einsatz nach dem Stand der Technik in der Antriebswelle zu befestigen.

In diesem Fall muss beim "Anbohren" der Zentrierdorn in der Antriebswelle montiert und die Bohrkrone auf der Antriebswelle befestigt werden, um nach dem "Anbohren" die Bohrkrone abzumontieren, den Zentrierdorn zu entfernen, den Einsatz in der Antriebswelle zu montieren und die Bohrkrone wieder zu befestigen. Somit ergeben sich viele Arbeitsschritte, die zeitintensiv, anwenderunfreundlich und/oder durch Verschmutzungen der Teile, beispielsweise durch Staub verschmutzte Gewindegänge, schwierig durchzuführen sind. Die Einsatzmöglichkeiten eines Einsatzes und eines weiteren Mittels wie ein Zentrierdorn sind in diesem Fall begrenzt.

Wie oben bereits erklärt, ist erstens eine Antriebswelle mit einem innenangeordneten Befestigungsmittel, wie zum Beispiel ein Innengewinde, notwendig, um überhaupt einen Einsatz verwenden zu können. Zweitens ist bei einem vorhandenen Innengewinde einer Antriebswelle einer Bohrmaschine die Verwendung eines Zentrierdorns und eines Einsatzes nach dem Stand der Technik nur möglich, wenn das eine oder das andere Mittel während einer Bohrung verwendet wird. Ein gleichzeitiger Einsatz ist ausgeschlossen.

Die Aufgabe der vorliegenden Erfindung besteht darin, die Nachteile des Standes der Technik zumindest teilweise zu beheben und eine gegenüber dem Stand der Technik verbesserte Anordnung anzugeben, welche sich insbesondere durch einen verbesserten Bedienkomfort und/oder erweiterte Einsatzmöglichkeiten auszeichnet. Die Aufgabe besteht weiterhin darin, eine Bohrmaschine mit einer solchermaßen verbesserten Anordnung und ein Verfahren zur Bearbeitung eines Werkstücks mittels wenigstens einer solchermaßen verbesserten Anordnung anzugeben.

Diese Aufgabe wird gelöst durch die Merkmale der Ansprüche 1, 2, 9 und 14.

Diese Aufgabe wird gemäß einem ersten Aspekt der Erfindung mittels einer Anordnung nach Anspruch 1 gelöst, nämlich durch Bereitstellung einer Anordnung aus wenigstens einer Bohrkrone und wenigstens einem Anschlag für einen im Zuge einer Bohrung entstehenden Bohrkern oder Teile eines Bohrkerns, wobei der wenigstens eine Anschlag wenigstens eine Fluidöffnung quer zu einer Drehachse der wenigstens einen Bohrkrone aufweist, wobei der wenigstens eine Anschlag eine zentrale Durchgangsöffnung zur Aufnahme eines Zentrierdorns aufweist.

Durch die zentrale Durchgangsöffnung des Anschlags kann somit ein Zentrierdorn oder ein anderes Mittel durch die zentrale Durchgangsöffnung des gleichzeitig montierten Anschlags befestigt werden.

Auf diese Weise ist es möglich sowohl einen Anschlag, der als Bohrkernstopper oder als Bohrkernabstandhalter wirkt, gleichzeitig mit einem Zentrierdorn, der das Platzieren der Bohrkrone während des "Anbohrens" ermöglicht, zu verwenden. Die Einsatzmöglichkeiten sind somit erweitert.

Gemäß einem zweiten Aspekt der Erfindung ist es vorgesehen, dass die wenigstens eine Bohrkrone und der wenigstens eine Anschlag eine zusammenhängende Baueinheit bilden.

Wenn Bohrkrone und Anschlag eine zusammenhängende Baueinheit bilden, entfällt der Arbeitsschritt, bei dem der Anschlag, der als Bohrkernstopper oder als Bohrkernabstandhalter wirkt, separat befestigt und wieder gelöst werden muss. Das heißt, anstatt die Bohrkrone und den Anschlag in jeweils zwei Arbeitsschritten zu entfernen und zu befestigen, ist gemäß dem zweiten Aspekt der Erfindung nur ein Arbeitsschritt notwendig. Der Bedienkomfort ist somit verbessert.

Auf diese Weise wird auch die Gefahr der Verschmutzung an der Verbindungsstelle zwischen der Bohrkrone und dem Anschlag reduziert, wodurch erschwerte Montage, Beschädigungen der Teile und/oder Arbeitsunfälle vermieden und/oder vorgebeugt werden können.

Unter "quer zu einer Drehachse der wenigstens einen Bohrkrone" wird hier verstanden, dass der Verlauf der wenigstens einen Fluidöffnung von der Drehachse der wenigstens einen Bohrkrone abweicht.

Mit anderen Worten heißt das, dass die Verlaufslinie der wenigstens einen Fluidöffnung in einem Winkel, der von 0° abweicht, zur Drehachse der wenigstens einen Bohrkrone geneigt ist.

Es ist denkbar, dass die wenigstens eine Fluidöffnung in eine weitere Öffnung und/oder Bohrung und/oder Aussparung mündet, die parallel zur Drehachse der wenigstens einen Bohrkrone orientiert ist. In diesem Fall ist dennoch der Verlauf der wenigstens einen Fluidöffnung quer zu einer Drehachse der wenigstens einen Bohrkrone.

Es kann bevorzugt vorgesehen sein, dass die wenigstens eine Fluidöffnung als eine Fluidverbindung, vorzugsweise eine Gasverbindung, zwischen der Bohrkrone und der Bohrmaschine ausgebildet ist.

Es kann besonders bevorzugt vorgesehen sein, dass die wenigstens eine Fluidöffnung eine Fluideintrittsöffnung und/oder eine Fluidaustrittsöffnung sein kann. Beispielsweise kann die Fluidöffnung im Trockenbohr-Betrieb eine Fluideintrittsöffnung für die Umgebungsluft in die Bohrkrone oder eine Fluidaustrittsöffnung für die Kühlluft aus der Bohrkrone sein. In einem anderen Beispiel kann die Fluidöffnung im Nassbohr-Betrieb eine Fluideintrittsöffnung für ein Kühlmedium in die Bohrkrone oder eine Fluidaustrittsöffnung für ein Kühlmedium aus der Bohrkrone sein.

Durch die quer zu einer Drehachse der wenigstens einen Bohrkrone verlaufenden wenigstens einen Fluidöffnung kann bevorzugt eine Fluidverbindung, vorzugsweise eine Gasverbindung, zwischen der Bohrkrone und der Bohrmaschine gewahrt bleiben, selbst wenn im Zuge einer Bohrung ein entstehender Bohrkern oder Teile eines Bohrkerns abbrechen, von der wenigstens einen Fluidöffnung angesaugt werden und auf den Anschlag aufschlagen.

Weitere vorteilhafte Ausführungsformen der Anordnung werden in den abhängigen Ansprüchen definiert.

Gemäß einer bevorzugten Ausführungsform der Anordnung ist es vorgesehen, dass die wenigstens eine Bohrkrone umfasst:
- einen im Wesentlichen hohlzylindrischen Bohrkronenkörper, und/oder
- zumindest eine an einem Ende der wenigstens einen Bohrkrone angeordnete Schneidvorrichtung und/oder
- zumindest eine in Richtung eines, vorzugsweise des anderen, Endes der wenigstens einen Bohrkrone angeordnete Abschlussvorrichtung, insbesondere eine Endkappe, und/oder
- eine in Richtung eines, vorzugsweise des anderen, Endes der wenigstens einen Bohrkrone angeordnete Bohrkronenaufnahmevorrichtung, wobei die Bohrkronenaufnahmevorrichtung
   o eine Montageeinrichtung zur Kontaktaufnahme mit einem Montagewerkzeug, vorzugsweise einen kantigen Abschnitt, besonders bevorzugt einen Außensechskant, und/oder
   o eine Bohrkronenbefestigungseinrichtung zum Befestigen der Bohrkrone an einer Bohrmaschine, vorzugsweise an einer Antriebswelle einer Bohrmaschine, aufweist, vorzugsweise wobei die Bohrkronenbefestigungseinrichtung zum Befestigen der Bohrkrone an einer Bohrmaschine ein Gewinde, besonders bevorzugt ein Innengewinde, ist.

Durch einen im Wesentlichen hohlzylindrischen Bohrkronenkörper und die zumindest eine darauf angeordnete Schneidvorrichtung bestimmen die Kontur sowie Form der Bohrung. Es kann in einem anderem Ausführungsbeispiel auch vorgesehen sein, dass die zumindest eine Schneidvorrichtung Teil der wenigstens eine Bohrkrone sein kann. Mit anderen Worten kann vorgesehen sein, dass der im Wesentlichen hohlzylindrische Bohrkronenkörper Schneidelemente aufweist.

Die Montagevorrichtung zum Aufnehmen eines Montagewerkzeugs kann wie üblich ein Außensechskant sein. In diesem Fall kann das Montagewerkzeug ein Schraubenschlüssel sein. Es sind auch andere Montagewerkzeuge denkbar, wobei im weitesten Sinne auch ein manuelles Montieren ohne eigenes Werkzeug denkbar ist.

Die Bohrkronenbefestigungseinrichtung, die zum Befestigen der Bohrkrone an der Bohrmaschine dient, kann wie üblich ein Innengewinde sein, welches auf das Außengewinde der Antriebswelle der Bohrmaschine montiert werden kann. Es ist ebenso möglich die Bohrkrone mit der Bohrkronenbefestigungseinrichtung an einem Innengewinde der Antriebswelle der Bohrmaschine zu befestigen. Es kann auch vorgesehen sein, statt einem Gewinde eine andere Art der Befestigung vorzusehen.

Gemäß einer bevorzugten Ausführungsform der Anordnung ist es vorgesehen, dass die wenigstens eine Bohrkrone und/oder der wenigstens eine Anschlag aus einem Bauteil und/oder aus einem mehrteiligen Bauteilverbund bestehen und/oder besteht, wobei der Bauteilverbund lösbar und/oder unlösbar verbindbar ist.

Vorteilhaft an einer einteiligen Anordnung aus Bohrkrone und Anschlag kann sein, dass es sich hierbei um eine besonders stabile und robuste Anordnung handeln kann. Im Fall eines Bauteilverbunds kann der Anschlag unlösbar mit der Bohrkrone verbunden sein, beispielsweise durch eine Schweißverbindung, was ebenfalls eine robuste Anordnung ergeben kann und zudem aus fertigungstechnischen Gründen Vorteile bieten kann. Wenn der Bauteilverbund hingegen lösbar ausgebildet ist, bietet sich die Möglichkeit an, verschieden Anschläge für verschiedene Bohrkronen zu verwenden, was die Einsatzmöglichkeiten noch weiter vergrößert.

In einer bevorzugten Ausführungsvariante kann vorgesehen sein, dass die wenigstens eine Bohrkrone einen mehrteiligen Bauteilverbund aus dem im Wesentlichen hohlzylindrischen Bohrkronenkörper, der zumindest einen Schneidvorrichtung, der zumindest einen Abschlussvorrichtung, der zumindest einen Bohrkronenaufnahmevorrichtung darstellt.

In einer bevorzugten Ausführungsvariante kann vorgesehen sein, dass der im Wesentlichen hohlzylindrischen Bohrkronenkörper unlösbar mit der Abschlussvorrichtung durch eine Schweißverbindung verbunden ist.

In einer bevorzugten Ausführungsvariante kann vorgesehen sein, dass die Abschlussvorrichtung lösbar mit der Bohrkronenaufnahmevorrichtung verbunden ist.

In einer bevorzugten Ausführungsvariante kann vorgesehen sein, dass der wenigstens eine Anschlag ein Teil der Bohrkronenaufnahmevorrichtung ist und damit der wenigstens eine Anschlag sowie die Bohrkronenaufnahmevorrichtung ein Bauteil darstellen.

Gemäß einer bevorzugten Ausführungsform der Anordnung ist es vorgesehen, dass der wenigstens eine Anschlag wenigstens einen Anschlagpunkt und/oder wenigstens eine Anschlaglinie und/oder wenigstens eine Anschlagfläche, bevorzugt wenigstens zwei Anschlagflächen, besonders bevorzugt genau vier Anschlagflächen, aufweist, vorzugsweise wobei die wenigstens eine Anschlaglinie und/oder die wenigstens eine Anschlagfläche quer zu einer Drehachse der wenigstens einen Bohrkrone ausgerichtet sind, besonders vorzugsweise wobei die wenigstens eine Anschlaglinie und/oder die wenigstens eine Anschlagfläche im Wesentlichen senkrecht zu einer Drehachse der wenigstens einen Bohrkrone ausgerichtet sind.

Unter "im Wesentlichen senkrecht" wird hier verstanden, dass der Winkel zwischen zwei Elementen in der Nähe von 90°, vorzugsweise zwischen 45° und 135°, besonders bevorzugt zwischen 70° und 110°, liegt.

Durch den Einsatz von Anschlägen in Form eines Punktes, einer Linie und/oder einer Fläche bietet sich im Vorfeld die Möglichkeit, sich noch flexibler auf die Gefahr eines abgebrochenen Bohrkerns oder Teile eines Bohrkern einzustellen. Beispielsweise kann durch Anschläge mit kleiner Anschlagstelle wie bei Anschlagpunkten oder Anschlaglinien ein nicht brüchiger Bohrkern ausreichend gestoppt werden. Handelt es sich aber um ein brüchiges Material, bei dem der Bohrkern leicht zersplittert, kann eine oder mehrere große Anschlagflächen bevorzugt werden.

In einer bevorzugten Ausführungsvariante kann vorgesehen sein, dass die gleiche oder unterschiedliche Anzahl an Anschlagpunkten und/oder Anschlaglinien und/oder Anschlagflächen miteinander kombiniert werden.

In einer bevorzugten Ausführungsvariante kann vorgesehen sein, dass die vorhandenen Anschlaglinien und/oder Anschlagflächen die gleichen oder unterschiedliche Formen aufweisen können. Beispielsweise kann eine Anschlaglinie geradlinig und/oder gebogen sein. Anschlagflächen können beispielsweise eckig und/oder rund und/oder plan, mit anderen Worten eben, und/oder gewellt, mit anderen Worten uneben, hügelig, rau, sein.

Gemäß einer bevorzugten Ausführungsform der Anordnung ist es vorgesehen, dass die wenigstens eine Fluidöffnung im Wesentlichen senkrecht zu der Drehachse der wenigstens einen Bohrkrone angeordnet ist.

Wenn die wenigstens eine Fluidöffnung im Wesentlichen senkrecht zu der Drehachse der wenigstens einen Bohrkrone ist, so ist die Gefahr eines Verschließens der wenigstens einen Fluidöffnung durch einen Bohrkern oder Teile eines Bohrkerns geringer.

Gemäß einer bevorzugten Ausführungsform der Anordnung ist es vorgesehen, dass die wenigstens eine Fluidöffnung einen runden und/oder einen eckigen Querschnitt aufweist sowie durch zumindest eine Konturfläche des wenigstens einen Anschlags begrenzt ist.

Es kann beispielsweise vorteilhaft sein, die wenigstens eine Fluidöffnung durch eine Bohrung oder durch eine Fräsung oder durch ein anderes Fertigungsverfahren im Anschlag herzustellen. Je nach präferierter Anwendung und Herstellung ist damit eine runde Bohrung oder eine eckige sowie gefräste Nut oder eine Fluidöffnung hergestellt durch ein anderes Fertigungsverfahren bevorzugt.

Gemäß einer bevorzugten Ausführungsform der Anordnung ist es vorgesehen, dass die zentrale Durchgangsöffnung zur Aufnahme eines Zentrierdorns des wenigstens einen Anschlags konzentrisch mit der Drehachse der wenigstens einen Bohrkrone ist.

Durch die konzentrische Anordnung können Unwuchten und damit Verletzungsgefahr sowie etwaige Beschädigungen vorgebeugt werden.

In einer bevorzugten Ausführungsform kann vorgesehen, dass die die zentrale Durchgangsöffnung zur Aufnahme eines Zentrierdorns des wenigstens einen Anschlags größer oder gleich dem Durchmesser des Innengewindes der Antriebswelle der Bohrmaschine, besonders bevorzugt größer oder gleich dem Durchmesser des Außengewindes der Antriebswelle der Bohrmaschine, ist.

Weiters wird Schutz begehrt für eine Bohrmaschine mit wenigstens einem fluidführenden Abschnitt, vorzugsweise zumindest einen luftansaugenden Abschnitt, wenigstens einer Anordnung gemäß dem ersten und/oder zweiten erfindungsgemäßen Aspekt, und einer Bohrmaschinenbefestigungseinrichtung zur Befestigung der Bohrkrone oder der erfindungsgemäßen Anordnung an der Bohrmaschine, vorzugsweise wobei die Bohrkrone eine Bohrkronenbefestigungseinrichtung zum Befestigen der Bohrkrone an einer Bohrmaschine, vorzugsweise an einer Antriebswelle einer Bohrmaschine, vorzugsweise wobei die Bohrkronenbefestigungseinrichtung zum Befestigen der Bohrkrone an einer Bohrmaschine ein Gewinde, besonders bevorzugt ein Innengewinde, ist, aufweist und die Bohrmaschinenbefestigungseinrichtung eine zur Bohrkronenbefestigungseinrichtung der Bohrkrone korrespondierende Gegenbefestigungseinrichtung, welche vorzugsweise als Außengewinde ausgebildet ist, aufweist.

Durch eine solche Bohrmaschine kann eine erfindungsgemäße Anordnung für eine Bohrung eingesetzt werden, bei der durch einen im Zuge der Bohrung entstehendem Bohrkern oder Teile eines Bohrkerns der wenigstens eine fluidführende Abschnitt der Bohrmaschine nicht verschlossen sowie ein erhöhter Bedienkomfort vor, während und/oder nach des Bohrens erreicht wird.

Weitere vorteilhafte Ausführungsformen der Bohrmaschine mit wenigstens einer Anordnung gemäß dem ersten und/oder zweiten erfindungsgemäßen Aspekt werden in den abhängigen Ansprüchen definiert.

Gemäß einer bevorzugten Ausführungsform der Bohrmaschine ist es vorgesehen, dass der zumindest eine fluidführende Abschnitt, vorzugsweise der zumindest eine luftansaugenden Abschnitt, in einer Fluidverbindung mit einem Anschluss für eine Ansaugvorrichtung steht oder bringbar ist.

Die Ansaugvorrichtung kann beispielsweise ein Staubsauger sein, der mit der Bohrmaschine in Kontakt gebracht werden kann, um bei der Bohrung entstehenden Bohrstaub abzusaugen.

Die Ansaugvorrichtung kann in einer bevorzugten Ausführungsvariante mit Hilfe des angesaugten Fluids, beispielsweise Luft oder ein anderes Kühlmittel, die Bohrung und die verwendeten Teile zu kühlen.

Gemäß einer bevorzugten Ausführungsform der Bohrmaschine ist es vorgesehen, dass der zumindest eine fluidführende Abschnitt, vorzugsweise der zumindest eine luftansaugende Abschnitt, und/oder die Bohrmaschinenbefestigungseinrichtung in und/oder an einem, vorzugsweise mit der Bohrmaschine lösbar verbindbaren, Bohradapter ausgebildet sind.

Durch den Einsatz des Bohradapters können die Einsatzmöglichkeiten noch weiter vergrößert werden, da verschiedene Bohrmaschinen, beispielsweise ohne integrierten fluidführenden Abschnitt, mit der Anordnung verwendbar sind.

Gemäß einer bevorzugten Ausführungsform der Bohrmaschine ist es vorgesehen, dass an der Bohrmaschine eine Fixiereinrichtung zur lösbaren Fixierung eines weiteren Teils, bevorzugt eines Zentrierdorns oder eines Bohrers, besonders bevorzugt eines Zentrierbohrers, vorgesehen ist, vorzugsweise wobei die Fixiereinrichtung zur lösbaren Fixierung eines weiteren Teils in und/oder an einem, vorzugsweise mit der Bohrmaschine lösbar verbindbaren, Bohradapter ausgebildet ist und vorzugsweise wobei die Fixiereinrichtung ein Innengewinde aufweist.

Durch diese besonders bevorzugte Ausführungsvariante kann gleichzeitig neben der Anordnung, inklusive des Anschlags, ein weiteres Teil wie ein Zentrierdorn während einer Teilbohrung verwendet werden.

Gemäß einer bevorzugten Ausführungsform der Bohrmaschine ist es vorgesehen, dass die wenigstens eine Fluidöffnung als eine Fluidverbindung, vorzugsweise eine Gasverbindung, zwischen der Bohrkrone und des wenigstens einen fluidführenden Abschnitts, vorzugsweise des zumindest einen luftansaugenden Abschnitts, ausgebildet ist.

Auf diese Weise kann Bohrstaub und/oder Luft aus dem Hohlvolumen der Anordnung, konkret dem Hohlvolumen der Bohrkrone, durchgehend bis zum wenigstens einen fluidführenden Abschnitt, vorzugsweise noch weiter zu einer Ansaugvorrichtung, abgeführt werden.

Neben der Anordnung und der Bohrmaschine an sich betrifft die Erfindung auch ein Verfahren zur Bearbeitung eines Werkstücks mittels wenigstens einer Anordnung gemäß dem ersten und/oder zweiten erfindungsgemäßen Aspekt.

Gemäß einem ersten Aspekt eines Verfahrens zur Bearbeitung eines Werkstücks mittels wenigstens einer erfindungsgemäßen Anordnung ist es vorgesehen, dass
- der wenigstens eine Anschlag eine zentrale Durchgangsöffnung zur Aufnahme eines Zentrierdorns aufweist, wobei in einem ersten Verfahrensschritt ein Zentrierdorn in der wenigstens eine Durchgangsöffnung angeordnet und eine Teilbohrung des Werkstücks vorgenommen wird, und in einem zweiten Verfahrensschritt der Zentrierdorn entfernt und die Teilbohrung des Werkstücks fortgesetzt wird.

Durch den ersten Aspekt des Verfahrens kann mit einem erhöhten Bedienkomfort eine Teilbohrung mit Zentrierdorn vorgenommen und mit wenig Umrüstungsaufwand danach ohne Zentrierdorn fortgesetzt werden.

Gemäß einem zweiten Aspekt eines Verfahrens zur Bearbeitung eines Werkstücks mittels wenigstens einer erfindungsgemäßen Anordnung ist es vorgesehen, dass
- die wenigstens eine Bohrkrone und der wenigstens eine Anschlag eine zusammenhängende Baueinheit bilden, wobei die Baueinheit vor und/oder nach der Durchführung einer Bohrung des Werkstücks an einer Antriebswelle einer Bohrmaschine lösbar befestigt wird.

Durch den zweiten Aspekt des Verfahrens kann eine Bohrung durchgeführt werden, wobei davor nur eine Baueinheit befestigt werden muss anstatt eine Bohrkrone sowie einen Anschlag getrennt und nacheinander zu befestigen.

In einem bevorzugten Ausführungsbeispiel eines Verfahrens zur Bearbeitung eines Werkstücks mittels wenigstens einer erfindungsgemäßen Anordnung kann vorgesehen sein, dass das Verfahren zum Bohren von Löchern in Metall, insbesondere Stahlträgern, Asphalt, Beton, Stahlbeton, Mauerwerke, insbesondere Ziegelmauern, Gestein, insbesondere Fels und/oder mineralische Erdböden, und/oder Baugrund geeignet ist.

In einem bevorzugten Ausführungsbeispiel eines Verfahrens zur Bearbeitung eines Werkstücks mittels wenigstens einer erfindungsgemäßen Anordnung kann vorgesehen sein, dass das Verfahren zum Bohren von Löchern im Trockenbohreinsatz und/oder im Nassbohreinsatz geeignet ist.

Weitere Einzelheiten und Vorteile bevorzugter Ausgestaltungs-beispiele der Erfindung werden anhand der Figurenbeschreibung unter Bezugnahme auf die Zeichnungen im Folgenden näher erläutert. Darin zeigen:
- Fig. 1:: eine erfindungsgemäße Anordnung aus einer Bohrkrone und einem Anschlag;
- Fig. 2:: eine Draufsicht der Anordnung aus Fig. 1;
- Fig. 3:: Bohrkronenaufnahmevorrichtung mit dem Anschlag aus Fig. 1;
- Fig. 4:: eine Draufsicht der Bohrkronenaufnahmevorrichtung mit einem Anschlag aus Fig. 3;
- Fig. 5:: eine Unteransicht der Bohrkronenaufnahmevorrichtung mit einem Anschlag aus Fig. 3;
- Fig. 6:: eine perspektivische Ansicht der Anordnung aus Fig. 1.
- Fig. 7:: eine schematische Darstellung einer Bohrmaschine mit einer erfindungsgemäßen Anordnung;
- Fig. 8:: eine schematische Darstellung der Bohrmaschine aus Fig. 7 mit einem Zentrierdorn;
- Fig. 9:: eine schematische Darstellung einer Bohrmaschine aus Fig. 7 mit einem im Zuge einer Bohrung entstehenden Bohrkern.

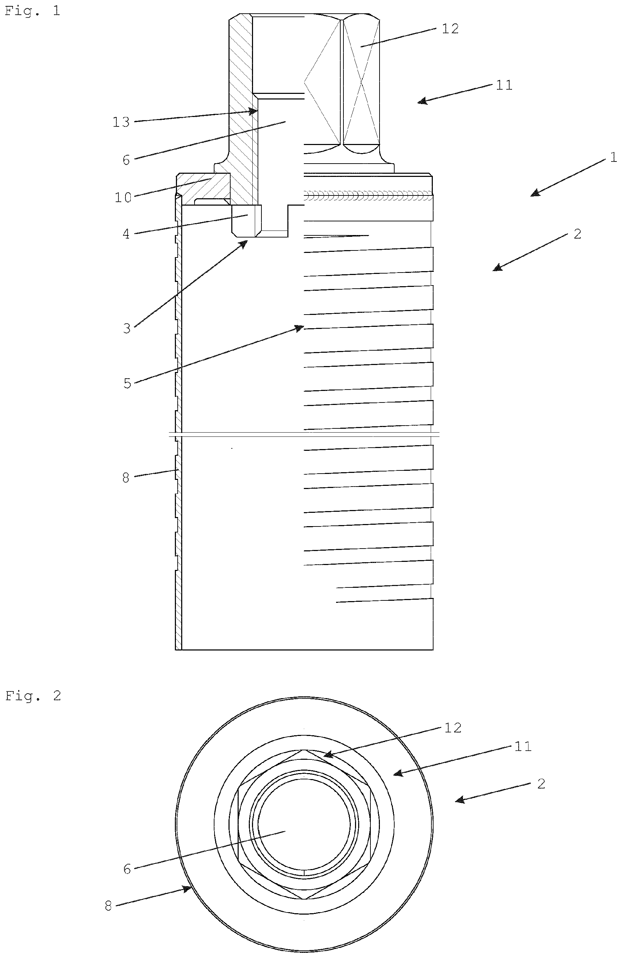

Fig. 1 zeigt eine erfindungsgemäße Anordnung 1 aus einer Bohrkrone 2 und einem Anschlag 3.

Die Darstellung in Fig. 1 ist zu einer Hälfte als eine Schnittdarstellung mit einer mittig durch die Anordnung 1 verlaufenden Schnittebene und zu anderen Hälfte als normale, ungeschnittene Darstellung abgebildet.

Die Anordnung 1 kann wenigstens eine Bohrkrone 2 und wenigstens einen Anschlag 3 für einen im Zuge einer Bohrung entstehenden Bohrkern 22 oder Teile eines Bohrkerns 22 beinhalten, wobei der wenigstens eine Anschlag 3 wenigstens eine Fluidöffnung 4 quer zu einer Drehachse 5 der wenigstens einen Bohrkrone 2 aufweist, wobei der wenigstens eine Anschlag 3 eine zentrale Durchgangsöffnung 6 zur Aufnahme eines Zentrierdorns 7 aufweist.

Eine zentrale Durchgangsöffnung 6 zur Aufnahme eines Zentrierdorns 7, der in dieser Abbildung nicht dargestellt ist, verläuft von oben nach unten entlang der Drehachse 5 und die vier Fluidöffnungen 4, wobei nur eine Fluidöffnungen 4 aufgrund der Schnittdarstellung ersichtlich ist, verlaufen rechtwinklig zur Drehachse 5.

Die wenigstens eine Bohrkrone 2 und der wenigstens eine Anschlag 3 können eine zusammenhängende Baueinheit bilden.

Die Anordnung 1 in Fig 1 beinhaltet neben dem wenigstens einen Anschlag 3 die wenigstens eine Bohrkrone 2. Die wenigstens eine Bohrkrone 2 umfasst dabei:
- einen im Wesentlichen hohlzylindrischen Bohrkronenkörper 8, und
- zumindest eine in Richtung eines, in diesem Ausführungsbeispiel des anderen, Endes der wenigstens einen Bohrkrone 2 angeordnete Abschlussvorrichtung 10, insbesondere eine Endkappe, und
- eine in Richtung eines, in diesem Ausführungsbeispiel des anderen, Endes der wenigstens einen Bohrkrone 2 angeordnete Bohrkronenaufnahmevorrichtung 11, wobei die Bohrkronenaufnahmevorrichtung 11
   o eine Montageeinrichtung 12 zur Kontaktaufnahme mit einem Montagewerkzeug, in diesem Ausführungsbeispiel einen kantigen Abschnitt, konkret in diesem Ausführungsbeispiel einen Außensechskant, und
   o eine Bohrkronenbefestigungseinrichtung 13 zum Befestigen der Bohrkrone 2 an einer Bohrmaschine 16, vorzugsweise an einer Antriebswelle einer Bohrmaschine 16, aufweist, wobei in diesem Ausführungsbeispiel die Bohrkronenbefestigungseinrichtung 13 zum Befestigen der Bohrkrone 2 an einer Bohrmaschine 16 ein Gewinde, konkret in diesem Ausführungsbeispiel ein Innengewinde, ist.

Die einzelnen Bauteile können zu einem Bauteilverbund zusammengefügt sein. Das heißt konkret, dass bei der Anordnung 1 die wenigstens eine Bohrkrone 2 aus einem mehrteiligen Bauteilverbund bestehen kann, wobei der Bauteilverbund der wenigstens einen Bohrkrone 2 lösbar und/oder unlösbar verbunden sein kann, und der wenigstens eine Anschlag 3 als Bestandteil der Bohrkronenaufnahmevorrichtung 11 ausgeführt sein kann.

Der hohlzylindrische Bohrkronenkörper 8 und die Abschlussvorrichtung 10 können über eine Schweißnaht, also über eine stoffschlüssige Verbindung, unlöslich miteinander verbunden sein, wie auf der rechten Seite der Fig. 1 anhand der ungeschnittenen Darstellung der Anordnung 1 zu erkennen ist.

Die Bohrkronenaufnahmevorrichtung 11 kann in die Abschlussvorrichtung 10 hineingesteckt werden. Durch die genaue Passung kann es zu einer formschlüssigen und kraftschlüssigen Verbindung zwischen der Abschlussvorrichtung 10 und der Bohrkronenaufnahmevorrichtung 11 kommen.

Es ist denkbar, dass neben der in Fig. 1 beschriebenen Ausführungsform der Anordnung 1 auch andere bevorzugte Ausführungsbeispiele vorgesehen sein können, wobei die wenigstens eine Bohrkrone 2 und/oder der wenigstens eine Anschlag 3 aus einem Bauteil und/oder aus einem mehrteiligen Bauteilverbund bestehen und/oder besteht, wobei der Bauteilverbund lösbar und/oder unlösbar verbindbar ist.

In Fig. 1 ist durch zwei Unterbrechungslinien durch den hohlzylindrischen Bohrkronenkörper 8 angedeutet, dass der hohlzylindrische Bohrkronenkörper 8 im Verhältnis auch eine größere Länge aufweisen kann.

Die Länge so wie alle Dimensionen wie beispielsweise Durchmesser, Breiten, Materialstärken der Anordnung 1, vorzugsweise des hohlzylindrischen Bohrkronenkörpers 8, sind beliebig wählbar und in keiner Weise limitiert.

Fig. 2 zeigt eine Draufsicht der Anordnung 1 aus Fig. 1, umfassend die Bohrkrone 2 und den Anschlag 3.

In der Draufsicht in Fig. 2 ist am äußersten Rand die Außenkontur des hohlzylindrischen Bohrkronenkörpers 8 und der Abschlussvorrichtung 10 zu erkennen. Innerhalb dieser beiden Außenkonturen ist die Bohrkronenaufnahmevorrichtung 11 zu erkennen. Die Bohrkronenaufnahmevorrichtung 11 weist, wie bereits in Fig. 1 ersichtlich, eine Montageeinrichtung 12 auf, wobei in diesem Ausführungsbeispiel die Montageeinrichtung 12 ein Außensechskant ist.

Der hohlzylindrische Bohrkronenkörper 8, die Abschlussvorrichtung 10 sowie die Bohrkronenaufnahmevorrichtung 11 können eine gemeinsame, zentrale Durchgangsöffnung 6 teilen.

In einem bevorzugten Ausführungsbeispiel kann vorgesehen sein, dass die zentrale Durchgangsöffnung 6 zur Aufnahme eines, hier nicht dargestellten, Zentrierdorns 7 des wenigstens einen Anschlags 3 konzentrisch mit der Drehachse 5 der wenigstens einen Bohrkrone 2 ist.

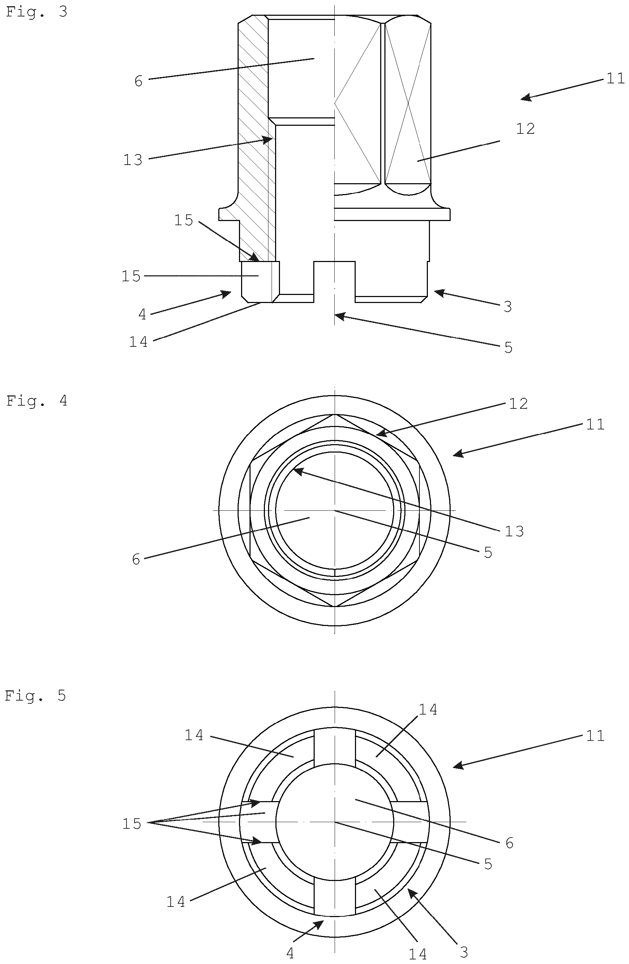

Fig. 3 zeigt die Bohrkronenaufnahmevorrichtung 11 mit dem Anschlag 3 aus Fig. 1.

Die Darstellung in Fig. 3 ist zu einer Hälfte als eine Schnittdarstellung mit einer mittig durch die Bohrkronenaufnahmevorrichtung 11 verlaufenden Schnittebene und zu anderen Hälfte als normale, ungeschnittene Darstellung abgebildet.

Die Bohrkronenaufnahmevorrichtung 11 kann einen Anschlag 3, eine zentrale Durchgangsöffnung 6, eine Montageeinrichtung 12 und eine Bohrkronenbefestigungseinrichtung 13 aufweisen.

Der Anschlag 3 kann einen Teil der zentralen Durchgangsöffnung 6, vier Fluidöffnungen 4, vier Anschlagflächen 14 und zwölf die Fluidöffnungen 4 begrenzende Konturflächen 15 aufweisen.

In der Schnittdarstellung in Fig. 3 sind lediglich eine der vier Fluidöffnungen 4 und lediglich zwei der zwölf die Fluidöffnungen 4 begrenzende Konturflächen 15 ersichtlich, wobei die zwei in Fig. 3 ersichtlichen Konturflächen 15 rechtwinklig zueinanderstehen und die eine in Fig. 3 ersichtlich Fluidöffnung 4 zu zwei Seiten begrenzen.

Die zentrale Durchgangsöffnung 6 kann sich entlang der Drehachse 5 von einem Ende der Bohrkronenaufnahmevorrichtung 11, an dem der Anschlag 3 angeordnet ist, über einen Abschnitt mit der Bohrkronenbefestigungseinrichtung 13 bis zum anderen Ende der Bohrkronenaufnahmevorrichtung 11 erstrecken.

Die Montageeinrichtung 12 ist, wie in diesem Ausführungsbeispiel anhand der auf der rechten Seite abgebildeten ungeschnittenen Darstellung in Fig. 3 ersichtlich, ein Außensechskant.

Die Bohrkronenbefestigungseinrichtung 13 ist, wie in diesem Ausführungsbeispiel anhand der auf der linken Seite abgebildeten Schnittdarstellung in Fig. 3 ersichtlich, ein Innengewinde.

Die Bohrkronenaufnahmevorrichtung 11 kann aus einem Bauteil bestehen.

Es ist denkbar, dass neben der in Fig. 3 beschriebenen Ausführungsform der Bohrkronenaufnahmevorrichtung 11 auch andere bevorzugte Ausführungsbeispiele vorgesehen sein können, wobei der wenigstens eine Anschlag 3 aus einem Bauteil und/oder aus einem mehrteiligen Bauteilverbund bestehen und/oder besteht, wobei der Bauteilverbund lösbar und/oder unlösbar verbindbar ist.

Fig. 4 zeigt eine Draufsicht der Bohrkronenaufnahmevorrichtung 11 mit einem Anschlag 3 aus Fig. 3.

Die Bohrkronenaufnahmevorrichtung 11 kann eine sechseckige Kontur aufweisen, die die Montageeinrichtung 12 darstellen kann. In der Fig. 4 ist die Montageeinrichtung 12 ein Außensechskant.

Die Bohrkronenaufnahmevorrichtung 11 kann eine runde Innenkontur aufweisen, die die Bohrkronenbefestigungseinrichtung 13 darstellen kann. In der Fig. 4 ist die Bohrkronenbefestigungseinrichtung 13 ein Innengewinde.

Eine Anordnung 1 kann mit Hilfe der Bohrkronenaufnahmevorrichtung 11, insbesondere mit Hilfe der Montageeinrichtung 12 und der Bohrkronenbefestigungseinrichtung 13, montiert werden. Es kann die Bohrkronenaufnahmevorrichtung 11 und/oder eine Anordnung 1 mit Hilfe der Bohrkronenaufnahmevorrichtung 11 an einer Bohrmaschine 16, vorzugsweise an einer Antriebswelle einer Bohrmaschine 16, befestigt werden, indem die als Innengewinde ausgeführte Bohrkronenbefestigungseinrichtung 13 auf ein Außengewinde einer Antriebswelle einer Bohrmaschine 16 aufgeschraubt wird. Um die Bohrkronenaufnahmevorrichtung 11 und/oder eine Anordnung 1 mit Hilfe der Bohrkronenaufnahmevorrichtung 11 festzuschrauben, kann die als Außensechskant ausgeführte Montageeinrichtung 12 von Hand oder mittels eines Werkzeugschlüssels angezogen werden.

Die Montageeinrichtung 12 und die Bohrkronenbefestigungseinrichtung 13 sind nicht auf die hier gezeigten Ausführungsformen begrenzt, sondern können jede beliebige Größe und Form einnehmen.

Die zentrale Durchgangsöffnung 6, die entlang der Drehachse 5 verlaufen und zur Aufnahme eines hier nicht dargestellten Zentrierdorns 7 geeignet sein kann, kann konzentrisch mit der Drehachse 5 der Montageeinrichtung 12 und der Bohrkronenbefestigungseinrichtung 13 sein.

Fig. 5 zeigt eine Unteransicht der Bohrkronenaufnahmevorrichtung 11 mit einem Anschlag 3 aus Fig. 3.

Der Anschlag 3 kann eine zentrale Durchgangsöffnung 6, eine hohlzylindrische Grundstruktur, vier Fluidöffnungen 4, vier Anschlagflächen 14 und zwölf die Fluidöffnungen 4 begrenzende Konturflächen 15 aufweisen.

Das durch den Anschlag 3 gebildete zylindrische Hohlvolumen kann ein Abschnitt der zentralen Durchgangsöffnung 6 sein.

Ausgehend vom durch den Anschlag 3 gebildeten Abschnitt der zentralen Durchgangsöffnung 6 können sich die vier nach außen verlaufende Fluidöffnungen 4 erstrecken.

Der Verlauf der vier Fluidöffnungen 4 können im rechten Winkel auf die Drehachse 5 gerichtet sein. Mit anderen Worten kann vorgesehen sein, dass die wenigstens eine Fluidöffnung 4 im Wesentlichen senkrecht zu der Drehachse 5 der wenigstens einen Bohrkrone 2 angeordnet ist.

In einem anderen bevorzugten Ausführungsbeispiel kann die wenigstens eine Fluidöffnung 4 auch jeden anderen Verlauf einnehmen und ist nicht auf den hier dargestellten Verlauf beschränkt. Beispielsweise kann die wenigstens eine Fluidöffnung 4 an der Drehachse 5 vorbeilaufend ausgerichtet und/oder teilweise gebogen und/oder teilweise geradlinig sein.

Die Form der vier Fluidöffnungen 4 kann im Wesentlichen ein Quader sein.

Die im Wesentlichen quaderförmigen Fluidöffnungen 4 können die Außenkontur mit der Innenkontur des Anschlags 3 verbinden. Mit anderen Worten kann die wenigstens eine Fluidöffnung 4 eine fluidführende Verbindung, eine Fluidverbindung, zwischen der Außenseite und der Innenseite des im Wesentlichen hohlzylindrischen Anschlags 3 sein.

Die vier Fluidöffnungen 4 können jeweils durch drei Konturflächen 15 des Anschlags 3 begrenzt sein. Die jeweils drei zusammengehörenden Konturflächen 15 einer einzelnen Fluidöffnung 4 können einen zu drei Seiten hin abgeschlossenen Kanal mit einem rechteckigen Querschnitt ausbilden.

In der Darstellung in Fig. 5 ist zu erkennen, dass jeweils eine der durch drei Konturflächen 15 begrenzten Fluidöffnungen 4 von der Drehachse 5 ausgehend nach rechts, unten, links und oben verlaufen

Im Fall eines abgebrochenen Bohrkerns 22 oder Teile eines Bohrkerns 22 im Zuge einer Bohrung kann der rechteckige Querschnitt der jeweiligen Fluidöffnungen 4 zu vier Seiten hin begrenzt werden. Dabei können die jeweiligen drei Konturflächen 15 des Anschlags 3 zu drei Seiten den vierseitigen sowie rechteckigen Querschnitt einer der vier Fluidöffnungen 4 begrenzen. Die letzte Seite des vierseitigen sowie rechteckigen Querschnitts einer der vier Fluidöffnungen 4 kann durch den im Zuge der Bohrung entstehenden Bohrkern 22 oder Teile des Bohrkerns 22 begrenzt werden. In einem solchen Fall kann eine Fluidöffnung 4 eine fluidführende Verbindung, eine Fluidverbindung, zwischen der Außenseite und der Innenseite des Anschlags 3 bleiben.

Die Form und Anzahl der Fluidöffnungen 4 und der Konturflächen 15 sind nicht auf die hier dargestellten Ausführungsformen beschränkt.

Es können beliebig viele Fluidöffnungen 4 vorgesehen sein. In einer bevorzugten Ausführungsform kann vorgesehen sein, dass mindestens eine Fluidöffnung 4 oder zwei Fluidöffnungen 4 oder vier Fluidöffnungen 4 oder mehrere Fluidöffnungen 4 vorgesehen ist oder sind.

Es können verschiedenförmige Fluidöffnungen 4 vorgesehen sein. In einer bevorzugten Ausführungsform kann vorgesehen sein, dass die wenigstens eine Fluidöffnung 4 einen runden und/oder einen eckigen Querschnitt aufweist sowie durch zumindest eine Konturfläche 15 des wenigstens einen Anschlags 3 begrenzt ist.

In einem bevorzugten Ausführungsbeispiel kann die wenigstens eine Fluidöffnung 4 ein Loch, vorzugsweise ein Bohrloch, durch den wenigstens einen Anschlag 3 sein, wobei eine zylinderförmige Konturfläche 15 des wenigstens einen Anschlags 3 die wenigstens eine Fluidöffnung 4 begrenzen kann

Es können vier Anschlagflächen 14 vorgesehen sein, wobei die vier Anschlagflächen 14 gleich große Kreisringausschnitte sein können.

Eine oder mehrere Anschlagflächen 14 können entlang des Flächenumfangs durch eine Abschrägung begrenzt sein.

In einem anderen bevorzugten Ausführungsbeispiel kann der Anschlag 3 statt oder zusätzlich zu wenigstens einer Anschlagfläche 14 wenigstens einen Anschlagpunkt und/oder wenigstens eine Anschlaglinie aufweisen.

Die Kombinationen aus wenigstens einem Anschlagpunkt und/oder wenigstens einer Anschlaglinie und/oder wenigstens einer Anschlagfläche 14 sind dabei unbegrenzt. Es kann beispielsweise vorgesehen sein, dass zwei Anschlaglinien und drei Anschlagflächen 14 oder drei Anschlagpunkte und drei Anschlaglinien oder ein Anschlagpunkt und vier Anschlagflächen 14 vorgesehen sind.

Die Anzahl und die einzelnen Formen des wenigstens einen Anschlagpunkts und/oder der wenigstens einen Anschlaglinie und/oder der wenigstens einen Anschlagfläche 14 sind dabei unbegrenzt und nicht durch die hier dargestellten Ausführungsformen beschränkt.

In einer besonders bevorzugten Ausführungsform kann vorgesehen sein, dass der wenigstens eine Anschlag 3 wenigstens einen Anschlagpunkt und/oder wenigstens eine Anschlaglinie und/oder wenigstens eine Anschlagfläche 14, bevorzugt wenigstens zwei Anschlagflächen 14, besonders bevorzugt genau vier Anschlagflächen 14, aufweist, vorzugsweise wobei die wenigstens eine Anschlaglinie und/oder die wenigstens eine Anschlagfläche 14 quer zu einer Drehachse 5 der wenigstens einen Bohrkrone 2 ausgerichtet sind, besonders vorzugsweise wobei die wenigstens eine Anschlaglinie und/oder die wenigstens eine Anschlagfläche 14 im Wesentlichen senkrecht zu einer Drehachse 5 der wenigstens einen Bohrkrone 2 ausgerichtet sind.

Der wenigstens eine Anschlagpunkt und/oder die wenigstens eine Anschlaglinie und/oder die wenigstens eine Anschlagfläche 14 kann den Anschlag 3 an einem Ende des Anschlags 3 entlang der Drehachse 5 begrenzen.

Der wenigstens eine Anschlagpunkt und/oder die wenigstens eine Anschlaglinie und/oder die wenigstens eine Anschlagfläche 14 kann eine Stelle darstellen, bis zu der sich ein im Zuge einer Bohrung entstehender Bohrkern 22 oder Teile eines Bohrkerns 22 bewegen können. Mit anderen Worten kann der wenigstens eine Anschlagpunkt und/oder die wenigstens eine Anschlaglinie und/oder die wenigstens eine Anschlagfläche 14 ein Endpunkt einer Bewegungsbahn eines im Zuge einer Bohrung entstehenden Bohrkerns 22 oder Teile eines Bohrkerns 22 sein.

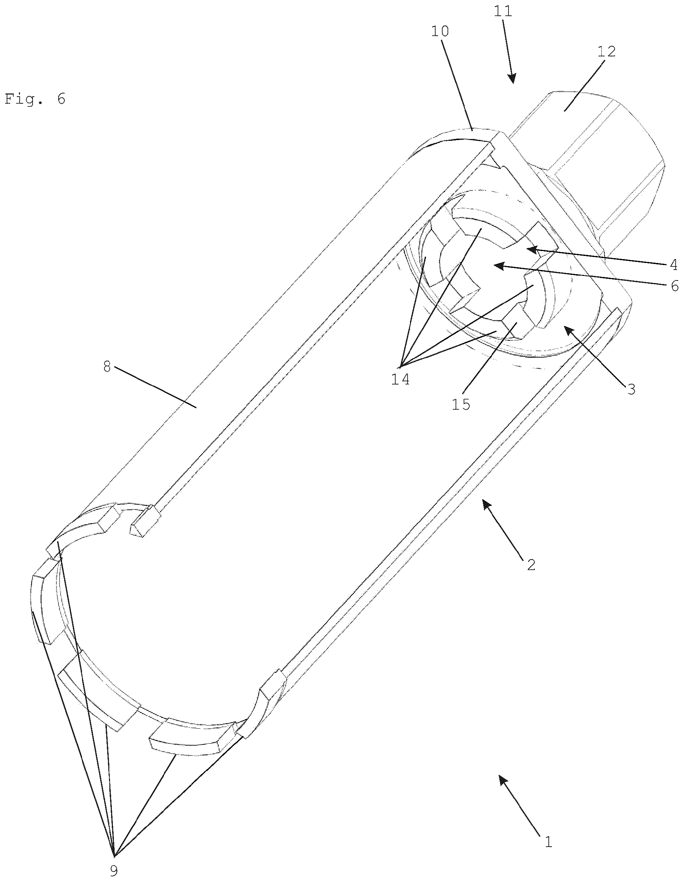

Fig. 6 zeigt eine perspektivische Ansicht der Anordnung 1 aus Fig. 1, umfassend die Bohrkrone 2 und den Anschlag 3.

Die Ansicht in Fig. 6 ist auf der rechten Seite der Anordnung 1, konkret dezentral entlang der Schneidvorrichtung 9, des hohlzylindrischen Bohrkronenkörpers 8 und der Abschlussvorrichtung 10 abgeschnitten, um das Hohlvolumen der Bohrkrone 2 und damit den Anschlag 3 abzubilden.

Die Fig. 6 zeigt eine Anordnung 1 aus wenigstens einer Bohrkrone 2 und wenigstens einem Anschlag 3 für einen im Zuge einer Bohrung entstehenden Bohrkern 22 oder Teile eines Bohrkerns 22, wobei der wenigstens eine Anschlag 3 wenigstens eine Fluidöffnung 4 quer zu einer Drehachse 5, die in Fig. 6 nicht dargestellt ist, der wenigstens einen Bohrkrone 2 aufweist, wobei der wenigstens eine Anschlag 3 eine zentrale Durchgangsöffnung 6 zur Aufnahme eines Zentrierdorns 7 aufweist.

Die Anordnung 1 in Fig 6 beinhaltet neben dem wenigstens einen Anschlag 3 die wenigstens eine Bohrkrone 2. Die wenigstens eine Bohrkrone 2 umfasst dabei:
- einen im Wesentlichen hohlzylindrischen Bohrkronenkörper 8, und
- zumindest eine an einem Ende der wenigstens einen Bohrkrone 2 angeordnete Schneidvorrichtung 9 und
- zumindest eine in Richtung eines, vorzugsweise des anderen, Endes der wenigstens einen Bohrkrone 2 angeordnete Abschlussvorrichtung 10, insbesondere eine Endkappe, und
- eine in Richtung eines, vorzugsweise des anderen, Endes der wenigstens einen Bohrkrone 2 angeordnete Bohrkronenaufnahmevorrichtung 11, wobei die Bohrkronenaufnahmevorrichtung 11
   o eine Montageeinrichtung 12 zur Kontaktaufnahme mit einem Montagewerkzeug, vorzugsweise einen kantigen Abschnitt, besonders bevorzugt einen Außensechskant, und/oder
   o eine Bohrkronenbefestigungseinrichtung 13 zum Befestigen der Bohrkrone 2 an einer Bohrmaschine 16, vorzugsweise an einer Antriebswelle einer Bohrmaschine 16, aufweist, vorzugsweise wobei die Bohrkronenbefestigungseinrichtung 13 zum Befestigen der Bohrkrone 2 an einer Bohrmaschine 16 ein Gewinde, besonders bevorzugt ein Innengewinde, ist.

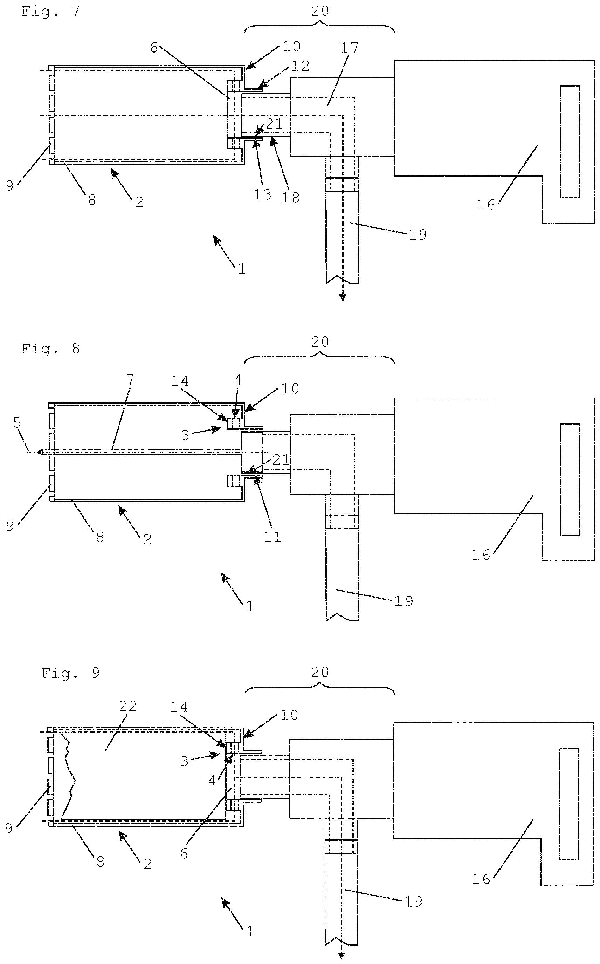

Fig. 7 zeigt eine schematische Darstellung einer Bohrmaschine 16 mit einer erfindungsgemäßen Anordnung 1.

Die Bohrmaschine 16 kann derart ausgeführt sein, dass die Bohrmaschine 16 mit wenigstens einem fluidführenden Abschnitt 17, vorzugsweise zumindest einen luftansaugenden Abschnitt, wenigstens einer Anordnung 1 gemäß dem ersten und/oder zweiten erfindungsgemäßen Aspekt, und einer Bohrmaschinenbefestigungseinrichtung 18 zur Befestigung der Bohrkrone 2 oder der Anordnung 1 an der Bohrmaschine 16 ausgestattet ist. Bevorzugt kann weiter vorgesehen sein, dass die Bohrkrone 2 eine Bohrkronenbefestigungseinrichtung 13 aufweist und die Bohrmaschinenbefestigungseinrichtung 18 der Bohrmaschine 16 eine zur Bohrkronenbefestigungseinrichtung 13 der Bohrkrone 2 korrespondierende Gegenbefestigungseinrichtung, welche vorzugsweise als Außengewinde ausgebildet ist, aufweist.

Der zumindest eine fluidführende Abschnitt 17, vorzugsweise der zumindest eine luftansaugenden Abschnitt, kann in einer Fluidverbindung mit einem Anschluss 19 für eine Ansaugvorrichtung stehen oder bringbar sein.

Der zumindest eine fluidführende Abschnitt 17, vorzugsweise der zumindest eine luftansaugende Abschnitt, und/oder die Bohrmaschinenbefestigungseinrichtung 18 kann in und/oder an einem, vorzugsweise mit der Bohrmaschine 16 lösbar verbindbaren, Bohradapter 20 ausgebildet sein.

In Fig. 7 ist anhand der gestrichelten Linien zu erkennen, dass durch das gesamte Hohlvolumen der Bohrkrone 2 Luft angesaugt werden kann und durch den fluidführenden Abschnitt 17 weitergeführt werden kann.

Fig. 8 zeigt eine schematische Darstellung der Bohrmaschine 16 aus Fig. 7 mit einem Zentrierdorn 7.

An der Bohrmaschine 16 kann eine Fixiereinrichtung 21 zur lösbaren Fixierung eines weiteren Teils, bevorzugt eines Zentrierdorns 7 oder eines Bohrers, besonders bevorzugt eines Zentrierbohrers, vorgesehen sein, vorzugsweise wobei die Fixiereinrichtung 21 zur lösbaren Fixierung eines weiteren Teils in und/oder an einem, vorzugsweise mit der Bohrmaschine 16 lösbar verbindbaren, Bohradapter 20 ausgebildet ist und vorzugsweise wobei die Fixiereinrichtung 21 ein Innengewinde aufweist.

Fig. 9 zeigt eine schematische Darstellung einer Bohrmaschine 16 aus Fig. 7 mit einem im Zuge einer Bohrung entstehenden Bohrkern 22.

Die wenigstens eine Fluidöffnung 4 kann als eine Fluidverbindung, vorzugsweise eine Gasverbindung, zwischen der Bohrkrone 2 und des wenigstens einen fluidführenden Abschnitts 17, vorzugsweise des zumindest einen luftansaugenden Abschnitts, ausgebildet sein.

Die Fluidverbindung zwischen der Bohrkrone 2 und des wenigstens einen fluidführenden Abschnitts 17, vorzugsweise des zumindest einen luftansaugenden Abschnitts, kann selbst dann erhalten bleiben, wenn ein durch eine Bohrung entstehender Bohrkern 22 die zentrale Durchgangsöffnung 6 verschließt, da die Fluidverbindung durch die Fluidöffnungen 4 bestehen bleiben kann.

In Fig. 9 ist anhand der gestrichelten Linien zu erkennen, dass durch Hohlvolumen der Bohrkrone 2, welches nicht durch einen abgebrochenen Bohrkern 22 ausgefüllt ist, Luft angesaugt werden kann und über die wenigstens eine Fluidöffnung 4 bis zum fluidführenden Abschnitt 17 weitergeführt werden kann.

Anhand der Fig. 7 bis 8 kann ein Verfahren beschrieben werden, bei dem in einem ersten Schritt mit der Anordnung 1 und einem Zentrierdorn 7 aus Fig. 8 eine Teilbohrung vorgenommen werden kann und nach Entfernen des Zentrierdorns in einem zweiten Schritt mit der Anordnung 1 aus Fig. 7 die Teilbohrung fortgesetzt werden kann. Selbst wenn beim Fortsetzen der Teilbohrung ein im Zuge der Teilbohrung entstehender Bohrkern 22 oder Teile eines Bohrkerns 22 die zentrale Durchgangsöffnung 6 verschließt und/oder verschließen, wie in Fig. 9 dargestellt, kann über die wenigstens eine Fluidöffnung 4 weiterhin eine Fluidverbindung aufrechterhalten werden.

Mit anderen Worten kann ein Verfahren zur Bearbeitung eines Werkstücks mittels wenigstens einer Anordnung 1 gemäß dem ersten und/oder dem zweiten erfindungsgemäßen Aspekt durchgeführt werden, bei dem
- der wenigstens eine Anschlag 3 eine zentrale Durchgangsöffnung 6 zur Aufnahme eines Zentrierdorns 7 aufweist, wobei in einem ersten Verfahrensschritt ein Zentrierdorn 7 in der wenigstens eine Durchgangsöffnung 6 angeordnet und eine Teilbohrung des Werkstücks vorgenommen wird, und in einem zweiten Verfahrensschritt der Zentrierdorn 7 entfernt und die Teilbohrung des Werkstücks fortgesetzt wird, und/oder
- die wenigstens eine Bohrkrone 2 und der wenigstens eine Anschlag 3 eine zusammenhängende Baueinheit bilden, wobei die Baueinheit vor und/oder nach der Durchführung einer Bohrung des Werkstücks an einer Antriebswelle einer Bohrmaschine 16 lösbar befestigt wird.

### Bezugszeichenliste:

- 1: Anordnung
- 2: Bohrkrone
- 3: Anschlag
- 4: Fluidöffnung
- 5: Drehachse
- 6: zentrale Durchgangsöffnung
- 7: Zentrierdorn
- 8: Bohrkronenkörper
- 9: Schneidvorrichtung
- 10: Abschlussvorrichtung
- 11: Bohrkronenaufnahmevorrichtung
- 12: Montageeinrichtung
- 13: Bohrkronenbefestigungseinrichtung
- 14: Anschlagfläche
- 15: Konturfläche
- 16: Bohrmaschine
- 17: fluidführenden Abschnitt
- 18: Bohrmaschinenbefestigungseinrichtung
- 19: Anschluss
- 20: Bohradapter
- 21: Fixiereinrichtung
- 22: Bohrkern

## Patentansprüche

1. Anordnung (1) aus wenigstens einer Bohrkrone (2) und wenigstens einem Anschlag (3) für einen im Zuge einer Bohrung entstehenden Bohrkern (22) oder Teile eines Bohrkerns 22, wobei der wenigstens eine Anschlag (3) wenigstens eine Fluidöffnung (4) quer zu einer Drehachse (5) der wenigstens einen Bohrkrone (2) aufweist, **dadurch gekennzeichnet, dass** der wenigstens eine Anschlag (3) eine zentrale Durchgangsöffnung (6) zur Aufnahme eines Zentrierdorns (7) aufweist.

2. Anordnung (1) gemäß dem Oberbegriff des Anspruchs 1, vorzugsweise gemäß dem Anspruch 1, **dadurch gekennzeichnet, dass** die wenigstens eine Bohrkrone (2) und der wenigstens eine Anschlag (3) eine zusammenhängende Baueinheit bilden.

3. Anordnung (1) nach Anspruch 1 oder 2, wobei die wenigstens eine Bohrkrone (2) umfasst:
- einen im Wesentlichen hohlzylindrischen Bohrkronenkörper (8), und/oder
- zumindest eine an einem Ende der wenigstens einen Bohrkrone (2) angeordnete Schneidvorrichtung (9) und/oder
- zumindest eine in Richtung eines, vorzugsweise des anderen, Endes der wenigstens einen Bohrkrone (2) angeordnete Abschlussvorrichtung (10), insbesondere eine Endkappe, und/oder
- eine in Richtung eines, vorzugsweise des anderen, Endes der wenigstens einen Bohrkrone angeordnete Bohrkronenaufnahmevorrichtung (11), wobei die Bohrkronenaufnahmevorrichtung (11)
o eine Montageeinrichtung (12) zur Kontaktaufnahme mit einem Montagewerkzeug, vorzugsweise einen kantigen Abschnitt, besonders bevorzugt einen Außensechskant, und/oder
o eine Bohrkronenbefestigungseinrichtung (13) zum Befestigen der Bohrkrone (2) an einer Bohrmaschine (16), vorzugsweise an einer Antriebswelle einer Bohrmaschine (16), aufweist, vorzugsweise wobei die Bohrkronenbefestigungseinrichtung (13) zum Befestigen der Bohrkrone (2) an einer Bohrmaschine (16) ein Gewinde, besonders bevorzugt ein Innengewinde, ist.

4. Anordnung (1) nach einem der Ansprüche 1 bis 3, wobei die wenigstens eine Bohrkrone (2) und/oder der wenigstens eine Anschlag (3) aus einem Bauteil und/oder aus einem mehrteiligen Bauteilverbund bestehen und/oder besteht, wobei der Bauteilverbund lösbar und/oder unlösbar verbindbar ist.

5. Anordnung (1) nach einem der Ansprüche 1 bis 4, wobei der wenigstens eine Anschlag (3) wenigstens einen Anschlagpunkt und/oder wenigstens eine Anschlaglinie und/oder wenigstens eine Anschlagfläche (14), bevorzugt wenigstens zwei Anschlagflächen (14), besonders bevorzugt genau vier Anschlagflächen (14), aufweist, vorzugsweise wobei die wenigstens eine Anschlaglinie und/oder die wenigstens eine Anschlagfläche (14) quer zu einer Drehachse (5) der wenigstens einen Bohrkrone (2) ausgerichtet sind, besonders vorzugsweise wobei die wenigstens eine Anschlaglinie und/oder die wenigstens eine Anschlagfläche (14) im Wesentlichen senkrecht zu einer Drehachse (5) der wenigstens einen Bohrkrone (2) ausgerichtet sind.

6. Anordnung (1) nach einem der Ansprüche 1 bis 5, wobei die wenigstens eine Fluidöffnung (4) im Wesentlichen senkrecht zu der Drehachse (5) der wenigstens einen Bohrkrone (2) angeordnet ist.

7. Anordnung (1) nach einem der Ansprüche 1 bis 6, wobei die wenigstens eine Fluidöffnung (4) einen runden und/oder einen eckigen Querschnitt aufweist sowie durch zumindest eine Konturfläche (15) des wenigstens einen Anschlags (3) begrenzt ist.

8. Anordnung (1) nach einem der Ansprüche 1 bis 7, wobei die zentrale Durchgangsöffnung (6) zur Aufnahme eines Zentrierdorns (7) des wenigstens einen Anschlags (3) konzentrisch mit der Drehachse (5) der wenigstens einen Bohrkrone (2) ist.

9. Bohrmaschine (16) mit wenigstens einem fluidführenden Abschnitt (17), vorzugsweise zumindest einen luftansaugenden Abschnitt, wenigstens einer Anordnung (1) nach einem der Ansprüche 1 bis 8, und einer Bohrmaschinenbefestigungseinrichtung (18) zur Befestigung der Bohrkrone (2) oder der Anordnung (1) an der Bohrmaschine (16), vorzugsweise wobei die Bohrkrone (2) eine Bohrkronenbefestigungseinrichtung (13) gemäß Anspruch 3 aufweist und die Bohrmaschinenbefestigungseinrichtung (18) der Bohrmaschine (16) eine zur Bohrkronenbefestigungseinrichtung (13) der Bohrkrone (2) korrespondierende Gegenbefestigungseinrichtung, welche vorzugsweise als Außengewinde ausgebildet ist, aufweist.

10. Bohrmaschine (16) nach Anspruch 9, wobei der zumindest eine fluidführende Abschnitt (17), vorzugsweise der zumindest eine luftansaugenden Abschnitt, in einer Fluidverbindung mit einem Anschluss (19) für eine Ansaugvorrichtung steht oder bringbar ist.

11. Bohrmaschine (16) nach einem der Ansprüche 9 bis 10, wobei der zumindest eine fluidführende Abschnitt (17), vorzugsweise der zumindest eine luftansaugende Abschnitt, und/oder die Bohrmaschinenbefestigungseinrichtung (18) in und/oder an einem, vorzugsweise mit der Bohrmaschine (16) lösbar verbindbaren, Bohradapter (20) ausgebildet sind.

12. Bohrmaschine (16) nach einem der Ansprüche 9 bis 11, wobei an der Bohrmaschine (16) eine Fixiereinrichtung (21) zur lösbaren Fixierung eines weiteren Teils, bevorzugt eines Zentrierdorns (7) oder eines Bohrers, besonders bevorzugt eines Zentrierbohrers, vorgesehen ist, vorzugsweise wobei die Fixiereinrichtung (21) zur lösbaren Fixierung eines weiteren Teils in und/oder an einem, vorzugsweise mit der Bohrmaschine (16) lösbar verbindbaren, Bohradapter (20) ausgebildet ist und vorzugsweise wobei die Fixiereinrichtung (21) ein Innengewinde aufweist.

13. Bohrmaschine (16) nach einem der Ansprüche 9 bis 12, wobei die wenigstens eine Fluidöffnung (4) als eine Fluidverbindung, vorzugsweise eine Gasverbindung, zwischen der Bohrkrone (2) und des wenigstens einen fluidführenden Abschnitts (17), vorzugsweise des zumindest einen luftansaugenden Abschnitts, ausgebildet ist.

14. Verfahren zur Bearbeitung eines Werkstücks mittels wenigstens einer Anordnung (1) nach einem der Ansprüche 1 bis 8, **dadurch gekennzeichnet, dass**
- der wenigstens eine Anschlag (3) eine zentrale Durchgangsöffnung (6) zur Aufnahme eines Zentrierdorns (7) aufweist, wobei in einem ersten Verfahrensschritt ein Zentrierdorn (7) in der wenigstens eine Durchgangsöffnung (6) angeordnet und eine Teilbohrung des Werkstücks vorgenommen wird, und in einem zweiten Verfahrensschritt der Zentrierdorn (7) entfernt und die Teilbohrung des Werkstücks fortgesetzt wird, und/oder
- die wenigstens eine Bohrkrone (2) und der wenigstens eine Anschlag (3) eine zusammenhängende Baueinheit bilden, wobei die Baueinheit vor und/oder nach der Durchführung einer Bohrung des Werkstücks an einer Antriebswelle einer Bohrmaschine (16) lösbar befestigt wird.
